# EUROPEAN PATENT APPLICATION

(11) **EP 1 318 673 A2**
(43) Date of publication of application: **11.06.2003**
(21) Application number: 02257949.4
(22) Date of filing: 19.11.2002
(51) Int. Cl.: H04N 5/445, H04N 7/088

(54) **Method and apparatus for generating and displaying an index of received teletext pages**

(30) Priority: 06.12.2001 KR 2001076988
(71) Applicant: SAMSUNG ELECTRONICS CO., LTD., Suwon-City, Kyungki-do (KR)
(72) Inventor: Jung, Chang-joo, Suwon-city, Gyunggi-do (KR)
(74) Representative: Geary, Stuart Lloyd

(57) **Abstract**

Teletext pages are stored in a memory (33) and an index of stored pages is generated. The index can be displayed and a used can select a teletext page interactively using the index.

## Description

The present invention relates to a television receiving apparatus having support for teletext, the apparatus including teletext decoding means for decoding teletext signals, a memory, a screen, user input means and control means configured for storing decoded teletext page data in the memory and causing teletext pages to be displayed on the screen in response to operation of the user input means.

Teletext is an information service provided in television systems for providing useful information such as weather information, traffic information and news to viewers in form of texts and graphics. A television broadcasting station includes character and/or simple graphic signals in a broadcast television signal to provide teletext to viewers. The teletext transmission system of a television broadcasting station is a type of character multiplex broadcast. Teletext has been developed in the USA and Europe and recently used worldwide. Teletext can transmit a large volume of information in a short television signal transmission time.

Teletext transmission methods include a pattern transmission method and a code transmission method. The pattern transmission method transmits character and graphic pixels without format conversion and the code transmission method converts character and graphic pixels into codes.

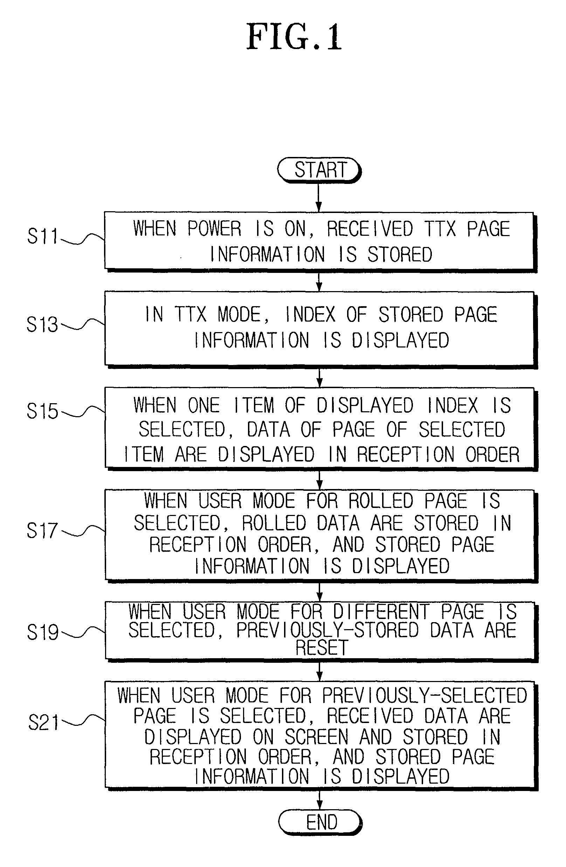

Figure 1 is a flowchart showing a conventional method for receiving teletext using a television. When the television is turned on, the television outputs a received broadcasting signal through its screen and speaker, and stores teletext page information (S11). In a teletext mode, the television displays the teletext page information on the screen (S13). An index page is often displayed initially on the screen.

When one item on the index page is selected, the television detects the data of the selected page in the teletext portion of the broadcast television signal and performs a rolling operation for sequentially displaying the detected data on the screen (S15). The television displays the pages in the order in which they are received rather than in page order.

When the viewer selects a user mode for editing the rolled pages, the television stores the pages in the order in which they are received and displays the page information on the screen (S17). On the other hand, when the viewer selects a user mode for a different page, the television resets the previously-stored data (S19). When the viewer re-selects a user mode for the previously-selected page, the television displays the selected page on the screen (S21). In addition, the television stores the data displayed on the screen according to the reception order.

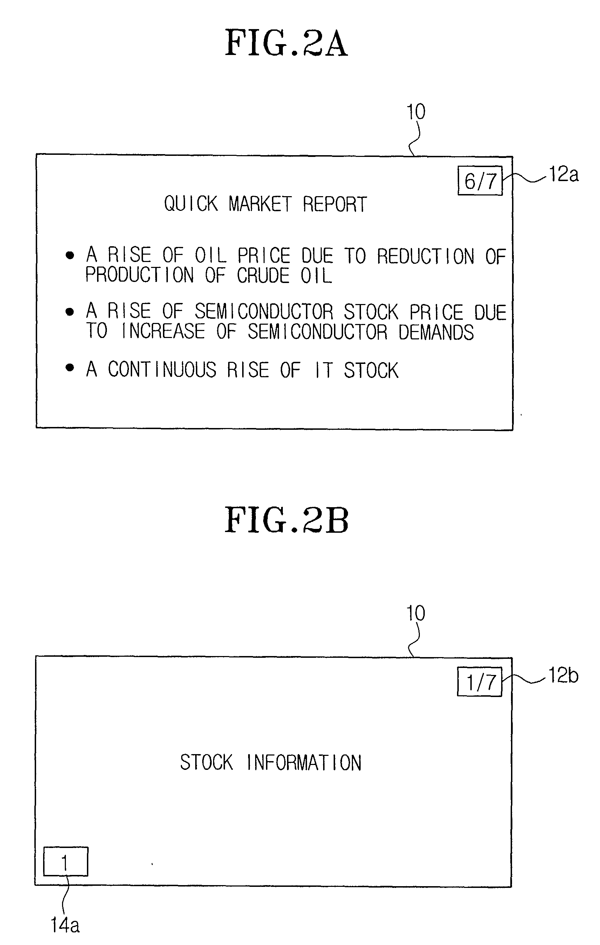

Figures 2A to 2C are views illustrating television screen in different states according to the viewer's selected mode. The page relates to stock information. Figure 2A shows a television screen 10 at step S15 of Figure 1. Referring to Figure 2A, when the television steps through the received pages, each page is displayed in turn on the screen 10. At this time, the television displays page information 12a showing that the current page is number six of seven. In this case, pages are not stored.

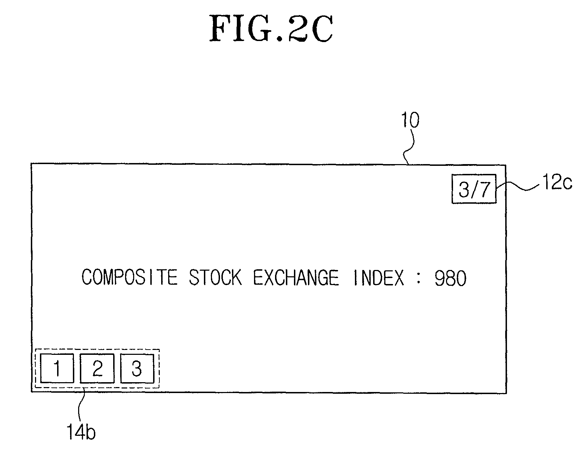

Figure 2B shows a display state of the screen 10 at step S17 of Figure 1. When the viewer selects a user mode for the rolled page, the television stores the page data in the order in which it is received. The television displays information 14a at the bottom left portion of the screen 10 to inform the user that the page received and stored in the user mode is the first page. On the other hand, Figure 2C shows the state where the page number 12c and the stored pages 14b are displayed on the screen 10 in the user mode. Accordingly, the viewer is informed that the pages received and stored in the user mode are the first page, the second page and the third page and the currently displayed page is the third page of seven pages.

In Figures 2B and 2C, when the viewer wants to see the seventh page, the view must wait for it to be received, displayed and stored since the page received in the initial user mode is the first page. As a result, it takes a long time to view the seventh page.

In addition, as explained in S19, S21 of Figure 1, the conventional television resets the previously-stored page according to variations of the user mode. In the case that the viewer selects the user mode for the previously-selected page, the conventional television re-receives and re-stores the data of the selected page. Therefore, the viewer should wait for reception and display of the wanted page.

An apparatus according to the present invention is characterised in that the control means is further configured to generate an index of teletext pages, for which data is stored in the memory, and display the index on the screen.

Preferably, the control means is responsive to operation of the user input means to cause the teletext page corresponding to a selected index item to be retrieved from the memory and displayed on the screen.

An embodiment of the present invention will now be described, by way of example, with reference to Figures 3 to 7 of the accompanying drawings, in which:
Figure 1 is a flowchart showing a conventional method for receiving teletext;
Figures 2A to 2C are views of a television screen according displaying teletext pages;
Figure 3 is a block diagram illustrating a television for receiving teletext according to the present invention;
Figure 4 is a view illustrating one example of an index displayed by the display unit in Figure 3;
Figure 5 shows a teletext page displayed after selection of an item in the index of Figure 4;
Figure 6 shows another teletext page; and
Figure 7 is a flowchart showing a method of receiving teletext according to the present invention.

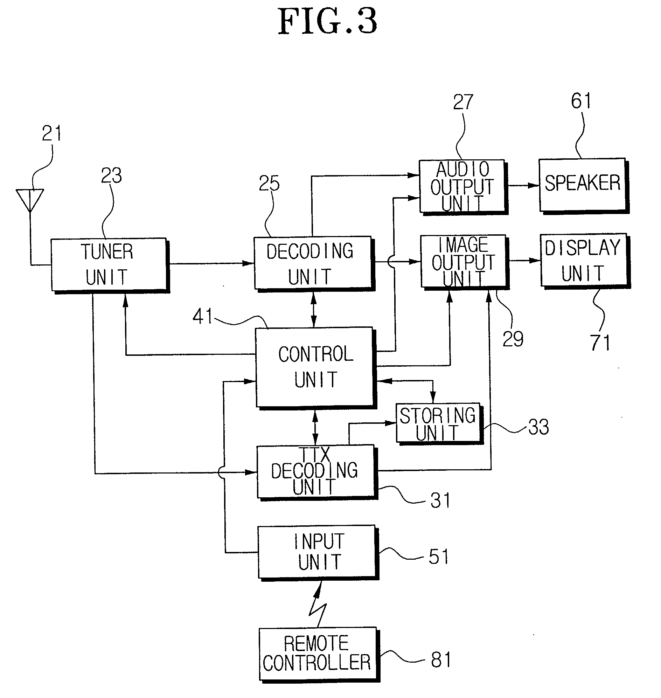

Referring to Figure 3, a television for receiving teletext comprises a tuner unit 23 for tuning to a broadcast television signal received by an antenna 21, a decoding unit 25 for detecting and decoding image and audio signal components in the tuned broadcast television signal, an audio output unit 27 for outputting the audio signal decoded in the decoding unit 25, an image output unit 29 for outputting the image signal decoded in the decoding unit 25, and a control unit 41 for controlling the operation of the tuner unit 23, the decoding unit 25, the audio output unit 27 and the image output unit 29. The audio signal from the audio output unit 27 is amplified and supplied to a speaker 61. In addition, the image signal output by the image output unit 29 is displayed on a screen by a display unit 71.

The television also includes a teletext decoding unit 31 for detecting and decoding the teletext signals within the received television broadcast signal, a storing unit 33 for storing the decoded teletext data, and an input unit 51 for receiving command signals for the control unit 41.

When the television is turned on, the teletext decoding unit 31 decodes received teletext page data. The storing unit 33 stores information about the decoded teletext pages and the decoded teletext page data. The input unit 51 has a mode selection key (not shown) for inputting a mode selection signal into the control unit 41, so that the television can be selectively operated in a television mode for outputting the video and audio signals of the received broadcast television signal to the speaker 61 and the display unit 71, and a teletext mode in which teletext data is displayed by the display unit 71. Accordingly, in the television mode, the control unit 41 controls the output operation of the audio output unit 27 and the image output unit 29, so that the signals from the decoding unit 25 can be outputted through the speaker 61 and the display unit 71. In addition, in the teletext mode, the control unit 41 controls the output operation of the image output unit 29 so that the decoded teletext data is outputted to the display unit 71.

After the television is turned on, if the television is switched from television mode to teletext mode, the control unit 41 retrieves an index from the storing unit 33 and displays it using the display unit 71. When a viewer selects an item in the index using the input unit 51, the control unit 41 displays, using the display unit 71, selected page which is retrieved from the storing unit 33. When receiving data which has not been stored in the storing unit 33 before selection, the control unit 41 controls the teletext decoding unit 31 and the storing unit 33 to decode and store the received data. In addition, the control unit 41 controls the output operation of the image output unit 29 to display the decoded data using the display unit 71.

Accordingly, the viewer can rapidly access a wanted page.

In this embodiment, when the viewer selects a different page, the control unit 41 controls the display unit 71 to display the selected page. When receiving the data of a previously-selected page, the control unit 41 controls the teletext decoding unit 31 and the storing unit 33 to decode and store the received data. In the case that the control unit 41 receives additional data after receiving all of the data of the previously-selected page, the control unit 41 updates the received data to the storing unit 33.

On the other hand, while a page is being displayed, if the operation mode is changed to display a previously selected page, the control unit 41 outputs the information of the page stored in the storing unit 33 through the image output unit 29, and displays the information through the display unit 71. The viewer can easily select a wanted page by using cursor movement keys (not shown) of the input unit 51 and a remote controller 81. As a result, the television can rapidly display the page selected by the viewer.

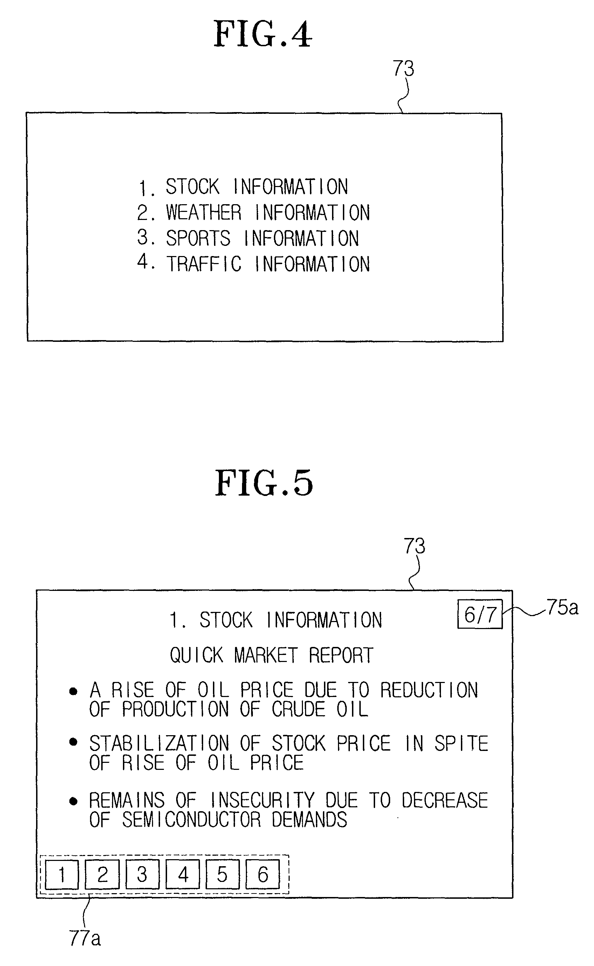

Referring to Figure 4, the teletext index is displayed on a screen 73 by the display unit 71. The items of the index displayed on the screen 73 have respective numbers. The viewer operates a cursor movement key (not shown) or a number key (not shown) of the input unit 51 or the remote controller 81 to select a menu item to cause the associated page to be displayed on the screen 73.

Referring to Figure 5, when an index menu item is select the associated page is displayed on the screen 73. In this example, the viewer is informed that the page relates to stock information by the title "1. stock information" displayed at the top centre portion of the screen 73. Page information 75a in the top right corner of the screen 73 indicates that the current page is the sixth of a rolling sequence of seven. The viewer can see that the contents of the sixth page include "Quick Market Reports". In this case, the page is one that has been stored in the storing unit 33 by the control unit 41.

A list 77a of pages of the current rolling sequence that have already been received and stored is provided at the bottom left corner of the screen 73. In the present example, the viewer can see that the first to sixth pages of the seven stock information pages have been received and stored. As a result, the viewer can rapidly select and view a wanted page by operating up/down and/or right/left direction movement keys (not shown) of the input unit 51 or the remote controller 81.

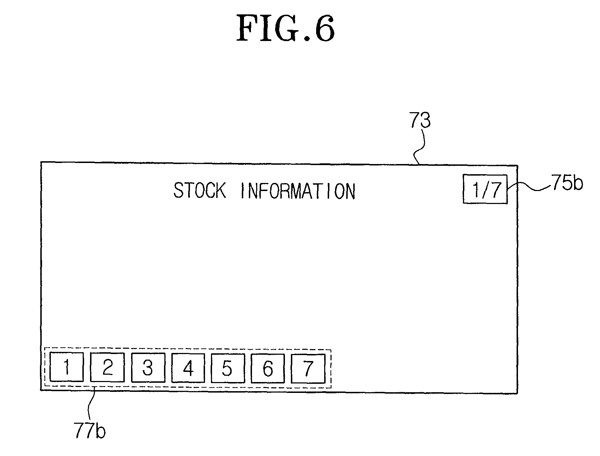

Referring to Figure 6, when the view returns to a previously-selected page during display of a different page. The displayed page information 75b informs the viewer that the current page displayed on the screen 73 is the first page of seven pages. The stored page information 77b informs the viewer that the first to seventh pages of the stock information, i.e. all of the stock information pages, have been received and stored. Therefore, the viewer can rapidly select and confirm a wanted page by inputting a right/left direction movement key of the input unit 51 and the remote controller 81.

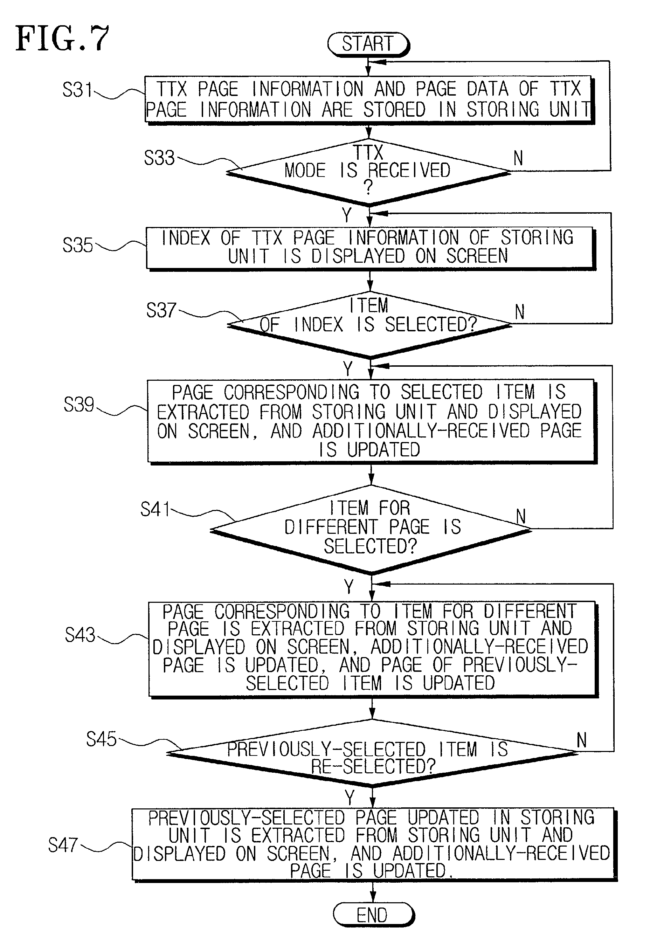

Referring to Figure 7, when the television is on and receiving a television broadcast signal, the control unit 41 controls the teletext decoding unit 31 to detect and decode teletext signals included in the television broadcast signal, and stores page information for the decoded teletext and the page data in the storing unit 33 (S31). The control unit 41 confirms reception of a command from the viewer for changing the operational mode of the television to the teletext mode (S33). If the control unit 41 has confirmed that the command for changing the operation mode into the teletext mode is not received in S33, the control unit 41 repeats operation S31.

On the other hand, if the control unit 41 confirms that the command for converting the operation mode into the teletext is received in S33, the control unit 41 extracts an index corresponding to the page information of the teletext stored in the storing unit 33, and controls the display unit 71 to display the index on the screen 73. The control unit 41 determines whether the viewer has selected an item on the index displayed on the screen 73 (S37). If the control unit 41 confirms that the viewer has not selected an item in S37, the control unit 41 continuously performs the display operation of S35.

If the control unit 41 confirms that the viewer has selected an item on the index in S37, the control unit 41 retrieves the corresponding page from the storing unit 33, and controls the display unit 71 to display the retrieved page on the screen 73 (S39). The control unit 41 performs an update operation for storing an additionally received page corresponding to the selected item in the storing unit 33. While displaying the page on the screen 73 and updating the data to the storing unit 33, the control unit 41 confirms reception of a selection signal for an item corresponding to a different page from the viewer (S41). If the control unit 41 determines that the viewer has not selected a different page in S41, the control unit 41 performs the display and update operations of S39.

If the control unit 41 confirms that the viewer selects the item for the different page in S41, the control unit 41 extracts a page corresponding to the selected item from the storing unit 33, and controls the display unit 71 to display the extracted page on the screen 73 (S43). At this time, the control unit 41 performs the update operation for storing an additionally-received page corresponding to the selected item in the storing unit 33. In addition, when receiving the page corresponding to a previously-selected item, the control unit 41 performs the update operation for storing the received page in the storing unit 33.

On the other hand, while performing the display and update operations due to selection of the item for the different page, the control unit 41 confirms re-selection of the previously-selected item (S45). When the control unit 41 judges that the viewer does not select the previously-selected item in S45, the control unit 41 performs the display and update operations of S43. In the case that the control unit 41 confirms that the viewer re-selects the previously-selected item in S45, the control unit 41 extracts the page which is updated and stored in the storing unit and which corresponds to the previously-selected item, and controls the display unit 71 to display the extracted page on the screen 73 (S47). When receiving an additional page corresponding to the previously-selected item, the control unit 41 performs the update operation for storing the received page in the storing unit 33.
Accordingly, when the television is turned on, the received teletext is stored regardless of the operation mode, and the page of the previously-selected item is updated during the display and storing operation of a different page. As a result, the viewer can rapidly select and confirm a wanted page according to the page information 75a, 75b, 77a and 77b displayed on the screen 73.

In accordance with the present invention, when the television is turned on, the information of received teletext page are stored regardless of the operation mode. Thereafter, when the operation mode is changed to the teletext mode and a page is selected, the selected page is displayed on the screen and the received page is rolled at the same time, thereby enabling the viewer to directly move to and select the received page. Thus, the viewer can rapidly select and view a wanted page.

Moreover, while one selected page is displayed and stored, if a previously selected page is received, the received page is stored. When the previously selected page is re-selected, the stored page information is displayed. Accordingly, the viewer can rapidly select and view a page.

## Claims

1. A television receiving apparatus having support for teletext, the apparatus including teletext decoding means (31) for decoding teletext signals, a memory (33), a screen (73), user input means (51, 81) and control means (41) configured for storing decoded teletext page data in the memory (33) and causing teletext pages to be displayed on the screen (73) in response to operation of the user input means (51, 81), **characterised in that** the control means (41) is further configured to generate an index of teletext pages, for which data is stored in the memory (33), and display the index on the screen (73).

2. An apparatus according to claim 1, wherein the control means (41) is responsive to operation of the user input means (51, 81) to cause the teletext page corresponding to a selected index item to be retrieved from the memory (33) and displayed on the screen (71).

3. A display apparatus for receiving tele-text, comprising:
a receiving unit for receiving a broadcasting signal containing tele-text information;
a detecting unit for detecting the tele-text information from the broadcasting signal;
a display unit for displaying the detected tele-text information on a screen;
a storing unit for storing a page of the detected tele-text information and data of the page;
a control unit for controlling the display unit to display at least a part of an index of the pages stored in the storing unit on the screen, when receiving an external mode conversion command for performing a tele-text mode; and
an input unit for inputting the mode conversion command and a selection command for page information containing the index and data,
wherein, when one item of the index displayed on the screen is selected, the control unit controls the display unit to display the data and page information which are stored and received in the storing unit and which correspond to the item on the screen.

4. The display apparatus according to claim 3, wherein, when the index, data and page information are displayed on the screen, the control unit stores the data corresponding to the selected item of the index in the storing unit.

5. The display apparatus according to claim 4, wherein, while the data and page information are displayed on the screen and the received data are stored in the storing unit, when a viewer selects an item corresponding to a different page, the control unit controls the display unit to display data and page information corresponding to the selected item on the screen from the storing unit, stores the received data in the storing unit, and also stores the data of the page corresponding to the selected item in the storing unit.

6. The display apparatus according to claim 5, wherein, while the data and page information of the different page are displayed on the screen, when the viewer re-selects a previously-selected item, the control unit extracts the data and page information corresponding to the re-selected item from the storing unit, displays the data and page information on the screen, and stores additionally-received data in the storing unit.

7. A method for receiving tele-text, comprising the steps of:
(a) detecting tele-text information from a broadcasting signal;
(b) storing a page of the detected tele-text information and data of the page;
(c) displaying at least a part of an index for the stored pages on a screen, when a mode conversion command is received to display the tele-text information on the screen;
(d) extracting the page, data, and page information corresponding to a selected item from the stored pages and data, and displaying them on the screen, when one item of the index is selected; and
(e) storing additionally-received data, while the page, data and page information are displayed on the screen.

8. The method according to claim 7, further comprising the steps of:
(f) discriminating selection of an item for a different page;
(g) extracting the page, data of the page and page information corresponding to the selected item from the stored pages and data, and displaying them on the screen; and
(h) storing additionally-received data of the page, while the page, the data of the page and the page information are displayed on the screen.

9. The method according to claim 8, further comprising the steps of:
judging whether a previously-selected item is re-selected;
extracting a page, data and page information corresponding to the selected item, and displaying them on the screen, when the previously-selected item is re-selected; and
storing additionally-received data, while the page, data and page information are displayed on the screen.
